# EUROPEAN PATENT APPLICATION

(11) **EP 1 589 430 A1**
(43) Date of publication of application: **26.10.2005**
(21) Application number: 03756702.1
(22) Date of filing: 20.10.2003
(51) Int. Cl.: G06F 12/00

(54) **DIFFERENTIAL DATA CREATING DEVICE AND METHOD, UPDATED DATA RECOVERY DEVICE AND METHOD, AND PROGRAM**

(30) Priority: 31.01.2003 JP 2003024412
(71) Applicant: MATSUSHITA ELECTRIC INDUSTRIAL CO., LTD., Kadoma-shi, Osaka 571-8501 (JP)
(72) Inventor: TANAKA, Nobuaki, Kawasaki-shi, Kanagawa 211-0051 (JP); IIDA, Kentarou, Yokohama-shi, Kanagawa 224-0054 (JP); ADACHI, Takanosuke, Yokohama-shi, Kanagawa 224-0054 (JP)
(74) Representative: Grünecker, Kinkeldey, Stockmair & Schwanhäusser Anwaltssozietät
(86) International application number: PCT/JP2003/013383
(87) International publication number: WO 2004/068348

(57) **Abstract**

A problem to be solved by the invention is to make data updating executable properly and efficiently in a simple computation procedure with a small memory capacity even when updatable areas for storing data to be updated are discontiguous with other areas being mixed in a memory.

A code area information file (115), which corresponds to arrangement information of code areas in a data storage memory (121) of a differential data restoring section (120), is provided in a differential data generating and sending section (110). The differential data restoring section (120) restores post-update data from differential data and pre-update data in a restoring section (124) while referencing a reference range specified by rewrite addresses generated based on the code area information file (115). This prevents a restoring process from being performed while referencing over other areas and makes it possible to perform a proper restoration of post-update data with simple and fewer processing steps that do not require such a process as address translation on a restoring side.

## Description

### <TECHNICAL FIELD>

The present invention relates to a data updating method for updating data within an apparatus itself using differential data. The invention also relates to an apparatus and a method for generating differential data, an apparatus and a method for restoring post-update data, and a program therefor, which are used for the data updating method.

### <BACKGROUND ART>

A terminal apparatus in which at least part of the apparatus' s operation is performed by an operation of a processor based on a predetermined program, such as a personal computer, a personal digital assistant (PDA), and a mobile telephone, often undergoes a so-called upgrading by which the version of the data containing the subject program is updated for an improvement of the program. When updating the version of such data, the software data etc. before updated (hereafter referred to as "pre-update data"), which are recorded in a rewritable storage medium such as a flash ROM or a hard disk are rewritten with another version (generally a new version) of the software data etc. (hereafter referred to as "post-update data"). In this case, it is possible to simply replace the pre-update data with the post-update data, but it has been often the case that differential data between pre-update data and post-update data are generated and rewriting is performed using the post-update data generated from the pre-update databasedon the differential data.

One example of such a data updating method that has been proposed is a method in which the data updating is performed by trans ferring the data for updating via a communication channel such as a network. In this case, a procedure is used such that a transmitting-side apparatus compares pre-update data and post-update data and extracts the difference to transfer only the differential data, and a receiving side terminal apparatus restores post-update data from the pre-update data that have been in the apparatus and the transferred differential data in updating the data (for example, see Patent Reference 1).

When using the above-described data updating technique using differential data in practice, there is a case in which the whole data before updated and the whole data after updated are not compared in extracting the difference, but the difference is extracted by the whole is divided into some portions (referred to as "blocks") (for example, cf. Non-Patent Reference 1). It should be noted that the a detailed difference extracting technique in the foregoing Non-Patent Reference 1 is shown in the Non-Patent Reference 2.

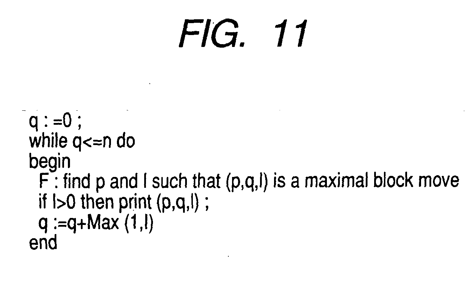

Here, the outline of the difference extracting technique shown in the Non-Patent Reference 2 is explained with reference to Figs. 11 to 12. This difference extracting technique is one referred to as Block-Move algorithm, in which pre-update data and post-update data are compared to search a matching data string, and the matching data string is copied so as to be moved from the pre-update data to the post-update data as a Move data whereas a non-matching data string is additionally written so as to be the data string as an Add data, whereby a differential data is generated.

Fig. 11 shows a pseudocode used for a differential data extraction. In the pseudocode, (p, q, l) is a command for moving contiguous data, which indicates that 1 (ell) byte(s) from address p in the pre-update data should be moved to address q in the post-update data. Addresses p1 to p3 indicate addresses in the pre-update data. When the pre-update data is in a memory, p1 to p3 is a difference between an address in the memory and the head address of the pre-update data. When there are pre-update data in a file, a distance p1 to p3 can be represented by a distance from the beginning of the file. Addresses q1 to q3 are addresses in the post-update data, the meaning of which is similar to that of p1 to p3 in the pre-update data.

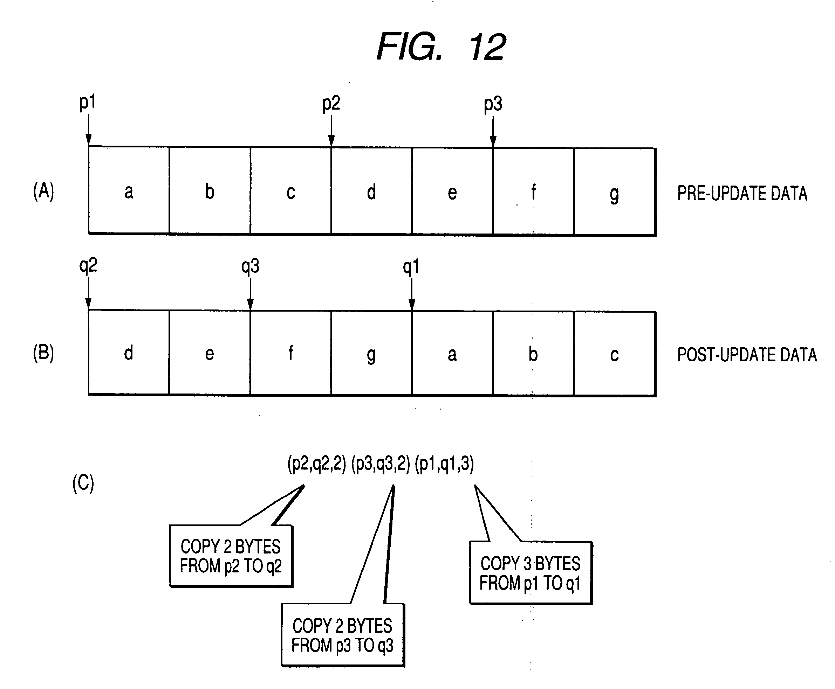

Fig. 12 shows one example of data, in which Fig. 12(A) shows pre-update data, Fig. 12(B) shows post-update data, and Fig. 12(C) shows a differential data therebetween, respectively. In the case of the pre-update data and the post-update data as shown in Figs. 12(A) and (B), the output from the pseudocode in Fig. 11 results in (p 2, q 2, 2) (p 3, q 3, 2) (p1, q1, 3), as shown in Fig. 12(C). This command is transferred, as a differential data, to a receiving-side terminal apparatus, and by applying this to the pre-update data of Fig. 12(A) in the terminal apparatus, the post-update data shown in Fig. 12(B) can be obtained.

The use of a data updating method such as described above makes the differential data to be transferred smaller, and enables the receiving-side terminal apparatus to restore and generate post-update data based on a small amount of differential data to update the data.

In addition, as shown in the foregoing Non-Patent Reference 2, the time it takes for the difference extraction can be shortened by comparing each of blocks, in which the data are divided by a predetermined unit, when generating differential data without comparing the whole data. In the case where there are small differences between the pre-update data and the post-update data and most of the pre-update data are in same blocks as those of the post-update data, the computational complexity for the difference extraction can be significantly reduced by referencing only a portion of the data in units of blocks, as described above. Also, in this case, the increase in the amount of differential data caused by dividing data into blocks is not very large, and the differential data can be kept small.

Meanwhile, the following method is also known. In the case where the amount of the data moved across blocks is large and the differential data cannot be made sufficiently small by only the difference extraction using the one-to-one comparison between blocks, the one-to-one comparison is not made, but a plurality of preceding and subsequent blocks are compared with the post-update data of the blocks to be rewritten, and differential data are generated. Then the post-update data are restored while referencing the plurality of preceding and subsequent blocks of the pre-update data. This method is shown in the foregoing Non-Patent Reference 1. By referencing preceding and subsequent blocks in this way, it is also possible to copy data from the pre-update data to the post-update data even with the data that are moved greatly across blocks, and the amount of differential data can be further reduced.

### (Patent Reference 1)

JP-A-8-255104 (Fig. 7).

### (Non-Patent Reference 1)

James J. Hunt, Kiem-Phong Vo, and Walter F. Tichy, "Delta Algorithms: An Empirical Analysis", ACM Transactions of Software Engineering and Methodology, ACM (Association for Computing Machinery), April, 1998, vol. 7-2, pp. 192-214.

### (Non-Patent Reference 2)

Walter F.Tichy, "The String-to-String Correction Probrem with Block Moves", ACM Transactions on Computer Systems, ACM (Association for Computing Machinery), November 1984, vol. 2-4, pp. 309-321.

However, the data updating methods of the foregoing conventional examples assume normal computers as the terminal apparatus that receive differential data or the like for updating and perform data updating, and they do not take into consideration the use for embedded type devices, such as mobile telephones and mobile information terminals, that have many restrictions on hardware resources such as memory or the like.

The embedded type devices such as mobile telephones have special features as follows.
(1) In updating a program, if an attempt is made to store post-update data in a different area from the area in which pre-update data have been stored with a memory such as RAM and flash ROM, which is used as a working area or a data storage area, while retaining the pre-update data, a sufficient memory area for storing all the post-update data cannot be made available in many cases.
(2) A rewritable non-volatile memory such as a flash ROM of recent equipment often have mixed areas, an area that retains data to be updated, such as apparatus's programs or the like, (also referred to as "updatable area" or "code area") and an area that retains data that the user has stored during the use and that is not the subject of rewiring in data updating (also referred to as a "non-updatable area" or "user area").

If such data updating methods as the foregoing conventional examples are used in the equipment with the above-described special features, the following problems arise.

First, post-update data cannot be save in updating because the memory does not have a sufficient area for storing both pre-update data and post-update data. In addition, if writing of post-update data is attempted into an area in which pre-update data have been stored at the same time as the restoration of post-update data, the content of the pre-update data to be referenced in restoring using differential data will be changed, inhibiting the restoration from being made properly.

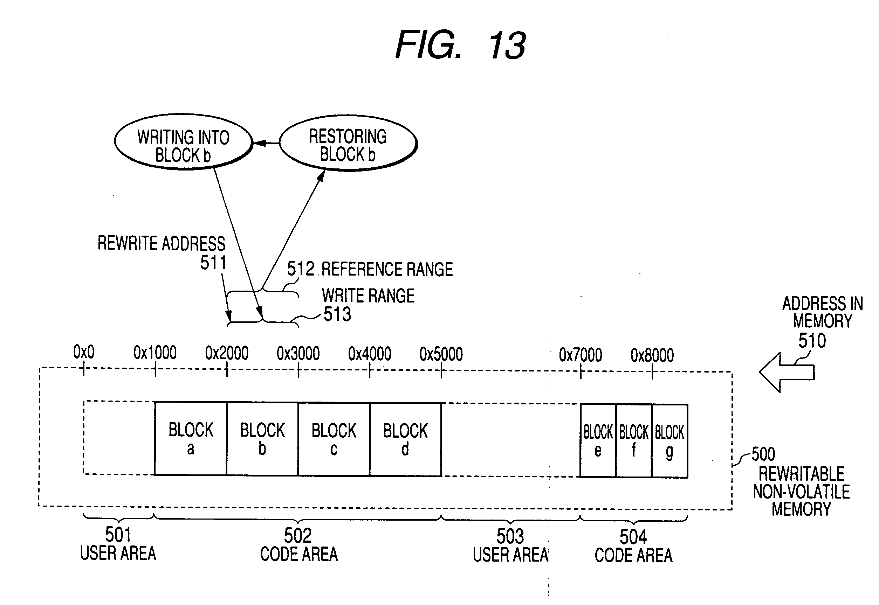

Fig. 13 is a diagram for illustrating a problem that arises when the restoring and writing of post-update data are performed concurrently. Here, the following describes a data updating operation in which user areas 501 and 503, which are non-updatable areas, and code areas 502 and 504, which are updatable areas mixed in a rewritable non-volatile memory 500, are mixed as described above. As illustrated in the figure, it is assumed that Blocks a-g of the code areas 502 and 504 are to be updated.

In this case, when performing data updating, with referencing pre-update data in a reference range 512 (Block b in the example illustrated in the figure), the beginning of which is a rewrite address 511 in memory addresses 510, post-update data are restored based on differential data and at the same time the post-update data are written into a write range 513 (Block b). At this time, the reference range 512 and the write range 513 overlap with each other, and the data of the reference range 512 changes during the restoring and writing operations; this makes it impossible to restore the post-update data.

At the time of datawriting into a flashROM, it is necessary to erase one whole block to write data, and from this viewpoint also, it is difficult to restore a block while referencing the same block.

At the time of restoring post-update data using the differential data extracted through a comparison between pre-update data and post-update data, it is necessary to reference unchanged pre-update data. The foregoing problem does not arise in the case of restoring and storing post-update data into a different area from the area of the pre-update data, as in the case of performing data updating on a computer; however, as in Fig. 13, in the case where there is a restriction on memory capacity or the like and pre-update data need to be rewritten into post-update data within the same area, such data updating methods as the above-described conventional examples cannot be applied as they are.

Secondly, in the case where post-update data are restored with referencing a plurality of preceding and subsequent blocks as described in a conventional example, proper restoration cannot be performed if a user area, which is a non-updatable area, and a code area, which is an updatable area, are mixed and code areas discontiguous, or where blocks with different block sizes are mixed in a code area.

Current embedded devices have become larger in scale and more complex, and sometimes contain discontiguous code areas and non-uniform block sizes as described above in terms of its memory arrangement and usage.

If blocks with the same size are not contiguous at the time of generating restoration data by, not comparing block by block, but comparing a plurality of preceding and subsequent blocks, a difference extracting means interprets the areas to be updated as being contiguous and extracts the difference accordingly. In restoring data, if post-update data are restored by referencing a plurality of preceding and subsequent blocks based on this differential data, it is possible to reference other data than that has been referenced for the difference extraction, and there is a risk that data restoring cannot be performed properly.

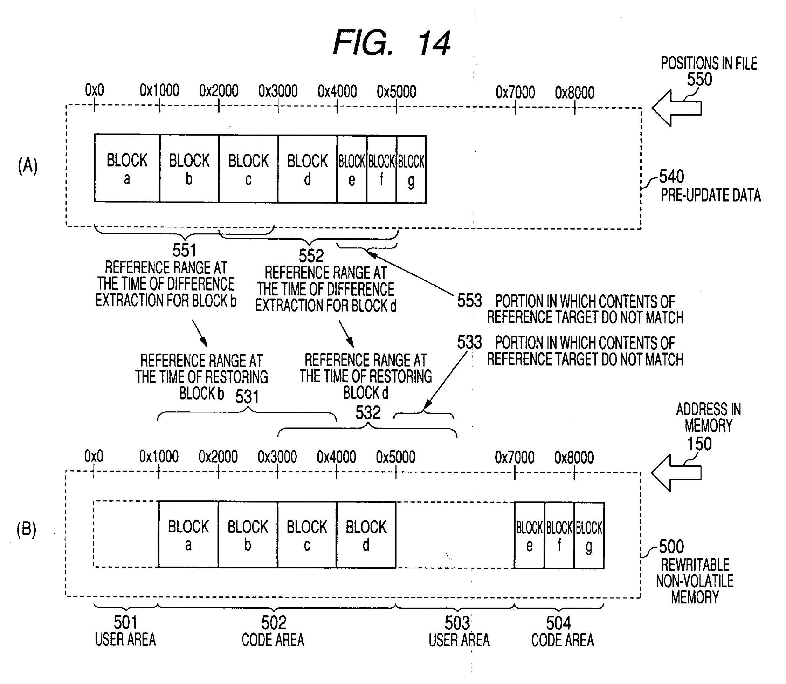

Fig. 14 is a diagram for explaining a problem in the case where code areas, which are updatable areas, are discontiguous. Here, the following describes a data updating operation for Blocks a-g of the code areas 502 and 504 in the state in which the user areas 501 and 503, which are non-updatable areas, and the code areas 502 and 504, which are updatable areas, are mixed in the rewritable non-volatile memory 500, as in Fig. 13.

As illustrated in Fig. 14(A), in the casewhere apre-update data 540 is divided by uniform and contiguous block sizes and a plurality of blocks are compared to perform a difference extraction according to the conventional method, in positions 550 in a file of pre-update data 540, a reference range 551 is compared and referenced for Block b while a reference range 552 is compared and referenced for Block d between the pre-update data and the post-update data. When restoring the post-update data, as illustrated in Fig. 14(B), a reference range 531 is referenced for Block b while a reference range 532 is referenced for Block d in addresses 510 of the rewritable non-volatile memory 500. At this time, a user area 503 is referenced for Block d, causing portions 533 and 553 in which the contents of reference targets do not match between the time of extracting difference and the time of restoring, and the data cannot be restored properly. In addition, there is a possibility that the data are also written into the user area since the distinction between user areas and code areas is not recognized.

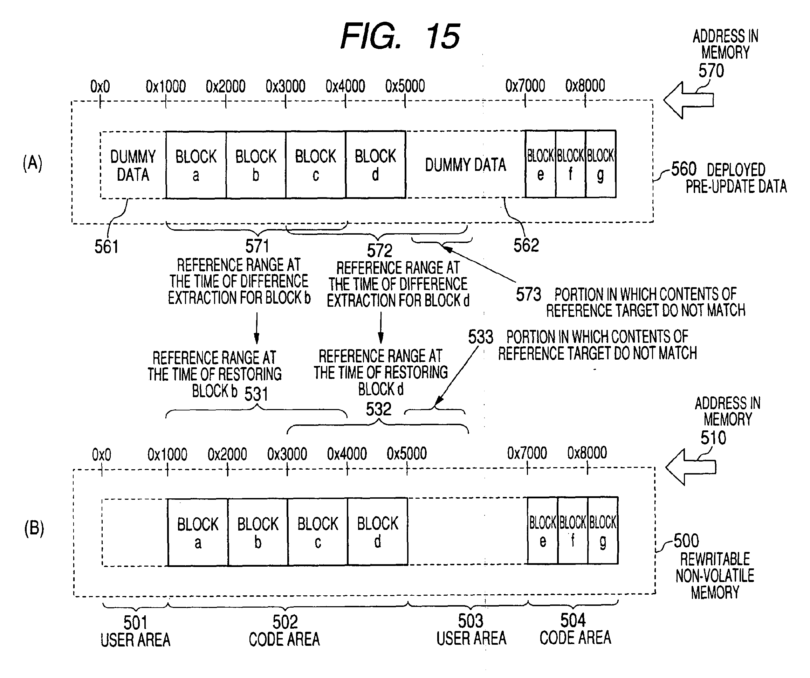

To avoid the mismatching in the positions of reference ranges in the data restoration, it is conceivable to insert and deploy dummy data 561 and 562 in the user area portions so that the pre-update data has the same arrangement as that deployed on the rewritable non-volatile memory 500, as illustrated in Figs. 15(A) and (B), and perform a difference extraction using a deployed pre-update data 560. In this case, in addresses 570 of the pre-update data 560 in the memory, a reference range 571 is compared and referenced for Block b and a reference range 572 is compared and referenced for Block d between the pre-update data and the post-update data.

This method also creates portions 533 and 573 in which the contents of reference targets do not match and thus cannot perform a data restoration properly, since dummy data 562 are referenced for Block d at the time of the difference extraction, while the user area 503 that are different from the dummy data 562 are referenced at the time of restoring the post-update data.

Thus, the embedded type devices such as mobile telephones have special features as described in the foregoing (1) and (2) and have many restrictions in terms of hardware, making it difficult to apply conventional data updating methods as they are. For this reason, there is a need for a data updating method that can execute restoring and writing of post-update data with less hardware resources and can update data to be updated properly but does not change data that are not to be updated.

The invention has been accomplished to solve the foregoing problems, and its object is to provide an apparatus and a method for generating differential data, an apparatus and a method for restoring post-update data, as well as a program therefor, which are configured to rewrite and update data such as a program from pre-update data to post-update data in a same area in a memory even with equipment in which there is a restriction on hardware resources such as memory capacity.

It is also an object of the invention to provide an apparatus and a method for generating differential data, an apparatus and a method for restoring post-update data, as well as a program therefor, which are configured to efficiently execute data updating in a proper and simple computational procedure even in cases where a non-updatable area and an updatable area are mixed in a memory and storing areas for pre-update data andpost-update data are discontiguous, or where storing areas with different block sizes are mixed.

### <DISCLOSURE OF THE INVENTION>

The invention provides, in accordance with a first aspect, a differential data generating apparatus for generating differential data for rewriting data from pre-update data to post-update data, comprising: area setting means for setting a reference range of pre-update data at time of difference extraction based on storage area information about the pre-update data and the post-update data, the storage area information containing arrangement information of storage areas in data storage means on a data restoring side; difference extracting means for generating differential data by comparing and referencing the post-update data and the pre-update data in the reference range that has been set; and differential file generating means for generating a differential file in which header information containing address information of target data at the time of restoring data in the data storage means on the data storing side is added to the differential data that has been generated.

This enables the difference extractingmeans to reference only a single contiguous updatable area based on the storage area information and generate differential data, for example, even when updatable areas for storing the data to be updated and non-updatable areas for storing user data or the like are mixed and the updatable areas are discontiguous in the data storage means at the data restoring side. Moreover, the restoring-side apparatus too is capable of restoring post-update data from pre-update data and differential data properly while referencing only a single contiguous updatable area based on header information in the differential file.

In accordance with a second aspect, storage area information retaining means for holding the storage area information is provided; and when the data storage means on the data restoring side has a storage area that stores the pre-update data or the post-update data in units of blocks, the storage area information includes address information of a storage area that stores the pre-update data and the post-update data in the data storage means on the data restoring side, and where a storage area comprising one block or a plurality of blocks having contiguous addresses in the data storage means and a same block size is defined as one updatable area in the storage area that stores the pre-update data or the post-update data in units of blocks, the storage area information also includes a start address, an end address, and a block size for each updatable area.

This makes it possible to generate differential data while referencing only a single contiguous updatable area based on the storage area information and can prevent such a deficiency that the referencing is made over other areas in generating the differential data when the pre-update data and the post-update data contain a plurality of blocks and the differential data generation is performed in units of blocks.

In accordance with a third aspect, the area setting means sets the reference range so that a plurality of blocks including a target block and one or a plurality of preceding and subsequent blocks are referenced as the reference range of the pre-update data at time of difference extraction based on the storage area information, if the pre-update data and the post-update data are divided into a plurality of blocks so as to correspond to the storage area of the data storage means on the data restoring side; and the area setting means newly sets an area that is within the reference range and within the updatable area as the reference range if the reference range obtained from the target block does not fall within the updatable area.

Thus, when the pre-update data and the post-update data comprise a plurality of blocks and the differential data generation is performed while referencing a plurality of blocks including the target block and the preceding and subsequent blocks, it is possible to generate the differential data while referencing only a single contiguous updatable area based on the storage area information and without referencing over other areas. Moreover, in this case, the data amount of the differential data can be reduced by referencing a plurality of blocks. Therefore, the restoring-sideapparatuscan perform a data restoration properly while referencing a plurality of blocks even when the updatable areas in the data storage means are discontiguous.

In accordance with a fourth aspect, the header information includes address information indicating a write range for post-update data at time of data restoration in the data storage means on the data restoring side.

In accordance with a fifth aspect, the address information includes a reference range for pre-update data at time of data restoration in the data storage means on the data restoring side.

Thus, by utilizing the header information, the restoring-side apparatus can appropriately perform the restoring process for post-update data with referencing differential data and pre-update data and the write process for the restored post-update data, and it is possible to prevent such a problem as referencing over other areas and writing post-update data into a block that has still been in a reference range at the time of restoration. Consequently, a proper data rewriting from pre-update data to post-update data is possible. Moreover, these operations can be performed without storage area information.

The invention provides, in accordance with a sixth aspect, a differential data generating method for generating differential data for rewriting data from pre-update data to post-update data, comprising: an area setting step of setting a reference range of pre-update data at time of difference extraction based on storage area information about the pre-update data and the post-update data, the storage area information containing arrangement information of storage areas in data storage means on a data restoring side; a difference generating step of generating differential data by comparing and referencing the post-update data and the pre-update data within the reference range that has been set; a differential file generating step of generating a differential file in which header information containing address information of target data at the time of restoring data in the data storage means on the data storing side is added to the differential data that has been generated.

Thus, even when, for example, updatable areas for storing the data to be updated and non-updatable areas for storing user data or the like are mixed in the data storage means on the data restoring side and the updatable areas are discontiguous, differential data can be generated while referencing a single contiguous updatable area based on the storage area information. In addition, the restoring-side apparatus can also restore post-update data properly frompre-update data and differential data while referencing a single contiguous updatable area based on the storage area information.

In accordance with a seventh aspect, if the data storage means on the data restoring side has a storage area that stores the pre-update data or the post-update data in units of blocks, and if the storage area information includes address information of a storage area that stores the pre-update data and the post-update data in the data storage means on the data restoring side, and where a storage area comprising one block or a plurality of blocks having contiguous addresses in the data storage means and a same block size is defined as one updatable area in the storage area that stores the pre-update data or the post-update data in units of blocks, the storage area information also includes a start address, an end address, and a block size for each updatable area; in the area setting step, the reference range is set so that a plurality of blocks including a target block and one or a plurality of preceding and subsequent blocks are referenced as the reference range of the pre-update data at time of difference extraction based on the storage area information, if the pre-update data and the post-update data are divided into a plurality of blocks such as to correspond to the storage area of the data storage means on the data restoring side; and an area that is within the reference range and within the updatable area is newly set as the reference range if the reference range obtained from the target block does not fall within the updatable area.

Thus, when the pre-update data and the post-update data comprise a plurality of blocks and the differential data generation is performed while referencing a plurality of blocks including the target block and the preceding and subsequent blocks, it is possible to generate the differential data while referencing only a single contiguous updatable area based on the storage area information and without referencing over other areas. Moreover, in this case, the data amount of the differential data can be reduced by referencing a plurality of blocks. Therefore, the restoring-side apparatus can perform a data restoration properly while referencing a plurality of blocks even when the updatable areas in the data storage means are discontiguous.

The invention provides, in accordance with an eighth aspect, a program for executing the procedure of a differential data generating method as set forth in the sixth or seventh aspect.

By executing this program, data updating can be performed properly and efficiently in a simple calculation procedure even when non-updatable areas and updatable areas are mixed, storing areas for pre-update data andpost-update data are discontiguous, or storing areas having different block sizes are mixed in the data storage means of the restoring side.

The invention provides, in accordance with a ninth aspect, a post-update data restoring apparatus for rewriting data by restoring post-update data from pre-update data using differential data received via a communicating means, comprising: data storage means for storing the pre-update data and the post-update data; receiving means for receiving differential data transmitted via the communicating means and address information of target data in the data storage means at time of data restoration; data restoring means for restoring post-update data, while referencing pre-update data in a reference range in the data storage means that is specified based on the address information, from the pre-update data and the differential data; buffer means for holding the restored post-update data; and data write means for writing the held post-update data into a write range in the data storage means that is specified based on the address information.

Thus, even when, for example, updatable areas for storing the data to be updated and non-updatable areas for storing user data or the like are mixed and the updatable areas are discontiguous in the data storing means, the data restoring means is capable of restoringpost-update data while referencing only a single continuous updatable area based on the address information. In this case, such a process as address translation is unnecessary at the time of restoration, and the restoring process is possible with less and simple process steps.

In accordance with a tenth aspect, the address information is generated based on storage area information, the storage area information including arrangement information of storage areas in the data storage means about the pre-update data and the post-update data and being held in a differential data generating apparatus that generates the differential data; and the address information includes a write range for post-update data at time of data restoration in the data storage means.

In accordance with an 11th aspect, the address information includes a reference range for pre-update data at time of data restoration in the data storage means.

Thus, the restoring process for post-update data with referencing differential data and pre-update data and the writing process for the restored post-update data can be appropriately performed based on the address information with a small capacity memory, and it is possible to prevent such a problem as referencing over other areas and writing post-update data into a block that is still in a reference range at the time of restoration. Consequently, a proper data rewriting from pre-update data to post-update data is possible in a single data storage memory.

In accordance with a 12th aspect, the data storage means stores the pre-update data by dividing the data into a plurality of blocks in units of blocks, the storage areas of the data storage means being such that storage areas comprising one or a plurality of blocks having contiguous addresses in the data storage means and having a same block size are defined as one updatable area by the storage area information held in the differential data generating apparatus; the data restoring means restores the post-update data while referencing a plurality of blocks in the data storage means including a target block and one or a plurality of preceding and subsequent blocks as the reference range based on the address information; and if the reference range obtained from the target block does not fall within the updatable area, the data restoringmeans restores the post-update data while newly referencing an area that is within the reference range and within the updatable area as the reference range.

Thus, in cases where the pre-update data and the post-update data comprise a plurality of blocks and the restoration of update data is performed while referencing a plurality of blocks including the target block and the preceding and subsequent blocks, the data restoration can be performed properly while referencing a single contiguous updatable area based on the address information and without referencing over other areas, even when updatable areas are discontiguous in the data storage means.

In accordance with a 13th aspect, the buffer means has a plurality of areas comprising a ring buffer-type buffer and respectively holding post-update data that have been restored block by block; and if a write range in the data storage means for the post-update data held in the buffer means falls out of the reference range at time of data restoration by the data restoring means, the data write means writes applicable post-update data from the buffer means into the data storage means, and thereafter instructs the buffer means to free a holding area in the buffer means in which the post-update data that have been written.

Thus, by adopting a ring buffer type buffer means, the memory capacity of the data storage means can be minimized, and the restoring process for post-update data and the writing process for the restoredpost-update data canbe performed easily and appropriately; further, proper data rewriting from pre-update data to post-update data is possible in a single data storage memory. Moreover, the memory capacity of the buffer means can be also reduced. For example, the size of each area in the buffer means may be set equal to the largest block size in the data storage means. In addition, the number of areas in the buffer means (number of blocks) n has the relationship k = 2n - 1, where the number of blocks referenced at the time of restoration is k, and therefore, it is sufficient that the areas should be provided at the number of blocks n = (k + 1)/2.

The invention provides, in accordance with a 14th aspect, a post-update data restoring method for rewriting data by restoring post-update data from pre-update data using differential data received via a communicating means, comprising: a receiving step of receiving differential data transmitted via the communicating means and address information of target data in data storage means for storing the pre-update data at time of data restoration; a data restoring step of restoring post-update data, while referencing pre-update data in a reference range in the data storage means that is specified based on the address information, from the pre-update data and the differential data; a buffering step of holding the restored post-updated data; and a data writing step of writing the held post-update data into a write range in the data storage means that is specified based on the address information.

Thus, even when, for example, updatable areas for storing the data to be updated and non-updatable areas for storing user data or the like are mixed and the updatable areas are discontiguous in the data storing means, the restoring of post-update data is possible while referencing only a single continuous updatable area based on the address information. In this case, such a process as address translation is unnecessary at the time of restoration, and the restoring process is possible with less and simple process steps.

In accordance with a 15th aspect, the address information is generated based on storage area information, the storage area information including arrangement information of storage areas in the data storage means about the pre-update data and the post-update data and being held in a differential data generating apparatus that generates the differential data; the address information includes a write range for post-update data at time of data restoration in the data storage means; and if the data storage means stores the pre-update data by dividing the data into a plurality of blocks in units of blocks, the storage areas of the data storage means being such that storage areas comprising one or a plurality of blocks having contiguous addresses in the data storage means and having a same block size are defined as one updatable area by the storage area information held in the differential data generating apparatus, in the data restoring step, the post-update data are restored while referencing a plurality of blocks in the data storage means including a target block and one or a plurality of preceding and subsequent blocks as the reference range based on the address information; and if the reference range obtained from the target block does not fall within the updatable area, the post-update data are restored while newly referencing an area that is within the reference range and within the updatable area as the reference range in restoring the data.

In accordance with a 16th aspect, wherein the address information includes a reference range for pre-update data at time of data restoration in the data storage means.

Thus, in cases where the pre-update data and the post-update data comprise a plurality of blocks and the restoration of update data is performed while referencing a plurality of blocks including the target block and the preceding and subsequent blocks, the data restoration can be performed properly while referencing a single contiguous updatable area based on the address information and without referencing over other areas, even when updatable areas are discontiguous in the data storage means.

In accordance with a 17th aspect, in the buffering step, using a buffer means comprising a ring buffer-type buffer and having a plurality of areas, the post-update data that have been restored block by block are stored in one of the plurality of areas of the buffer means; and in the data writing step, if a write range in the data storage means for the post-update data held in the buffer means falls out of the reference range at time of data restoration in the data restoring step, applicable post-update data are written from the buffer means into the data storage means, and thereafter the buffer means is instructed to free a holding area in which the post-update data that have been written.

Thus, by adopting a ring buffer type buffer means, the memory capacity of the data storage means can be minimized, and the restoring process for post-update data and the writing process for the restoredpost-update data canbe performed easily and appropriately; further, proper data rewriting from pre-update data to post-update data is possible in a single data storage memory.

The invention provides, in accordance with an 18th aspect, a program for executing the procedure of a post-update data restoring method as set forth in any of the 14th to 17th aspects.

By executing this program, data updating can be performed properly and efficiently in a simple calculation procedure even when non-updatable areas and updatable areas are mixed, storing areas forpre-update data andpost-update data are discontiguous, or storing areas having different block sizes are mixed in the data storage means of the restoring side.

### <BRIEF DESCRIPTION OF THE DRAWINGS>

Fig. 1 is a block diagram showing the functional configuration of a data updating apparatus that realizes a data updating method according to an embodiment of the invention;
Fig. 2 shows one example of the content of a code area information file and the structure of a data storage memory according to the embodiment, in which (A) shows the content of the code area information and (B) shows the structure of the data storage memory, respectively;
Fig. 3 is a view showing one example of the format of a differential file for one block in a merged file according to the embodiment;
Fig. 4 is a view showing addresses and a reference range in restoring Block b of a code area in a data storage memory according to the embodiment;
Fig. 5 is a flowchart showing the operation procedure of differential data generation in a differential data generating and sending section of the embodiment;
Fig. 6 is a flowchart showing the operation procedure of post-update data restoration in a differential data restoring section of the embodiment;
Fig. 7 shows, step by step, a specific example of the operation in restoring data by the post-update data restoration algorithm shown in Fig. 6;
Fig. 8 shows, step by step, a specific example of the operation in restoring data by the post-update data restoration algorithm shown in Fig. 6;
Fig. 9 is a graph showing the relationship between reference block numbers and differential data sizes in the case where a differential data generating method according to the embodiment is applied;
Fig. 10 shows, step by step, a specific example of the operation in restoring data according to a conventional method, as a comparative example to the embodiment;
Fig. 11 is a view showing a pseudocode used for differential data extraction;
Fig. 12 shows one example of data in performing data updating, in which (A) shows pre-update data, (B) shows post-update data, and (C) shows differential data therebetween, respectively;
Fig. 13 is a view for explaining a problem that arises in the case where restoring and writing of post-update data are concurrently performed at the time of performing data updating in one rewritable non-volatile memory using a conventional data updating method;
Fig. 14 is a view for explaining a problem that arises in the case where code areas, which are updatable areas, are discontiguous at the time of performing data updating in one rewritable non-volatile memory using a conventional data updating method; and
Fig. 15 is a view for explaining a problem that arises in the case where dummy data are inserted to avoid difference in the positions of the reference ranges in restoring data at the time of performing data updating in one rewritable non-volatile memory using a conventional data updating method.

Reference numerals in the drawings are as follows: 101 denotes pre-update data, 102 denotes post-update data, 105 denotes a merged file, 110 denotes a differential data generating and sending section, 111 denotes a data storage section, 112 denotes a difference extracting section, 113 denotes a transmit buffer, 114 denotes a transmitting section, 115 denotes a code area information file, 116 denotes a code area setting section, 117 denotes a control section, 118 denotes an area information storing section, 120 denotes a differential data restoring section, 121 denotes a data storage memory, 122 denotes a receiving section, 123 denotes a receive buffer, 124 denotes a restoring section, 125 denotes a restoring buffer, 126 denotes a memory write section, 127 denotes a control section, 130 denotes a network, 151 denotes a rewrite address, 152 denotes a reference range, 153 denotes a write range, 201 and 203 denote user areas, and 202 and 204 denote code areas.

### <BEST MODE FOR CARRYING OUT THE INVENTION>

Hereinbelow, preferred embodiments of the invention are explained with reference to the drawings.

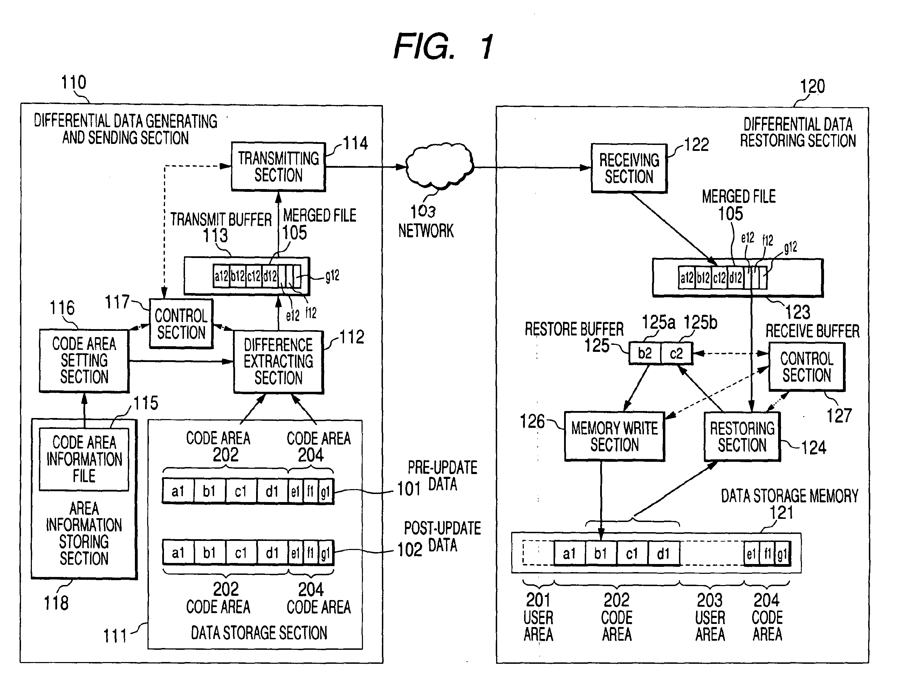

Fig. 1 is a block diagram showing the functional configuration of a data updating apparatus that realizes a data updating method according to an embodiment of the invention. The present embodiment describes, as one example of the data updating apparatus, an example of the structure and operation in the case where the version of data stored in a terminal apparatus such as a mobile telephone and containing an operation program or the like is to be updated.

A data updating apparatus of the embodiment comprises a differential data generating and sending section 110 and a differential data restoring section 120 connected via a wired or wireless communication network 130; the differential data generating and sending section 110 is provided in a server apparatus, and the differential data restoring section 120 is provided in a terminal apparatus, such as a mobile telephone. This data updating apparatus is used in such a case of updating data within the terminal apparatus via a communication line by transferring differential data from the server apparatus to the terminal apparatus via, for example, a network through a wireless communication network of a mobile communications service.

The differential data generating and sending section 110 comprises: a data storage section 111 made of a hard disk or the like that stores pre-update data 101 and post-update data 102; a difference extracting section 112 that extracts the difference between the pre-update data 101 and the post-update data 102 and generates differential data; a transmit buffer 113 that stores a transmission merged file 105 in which the generate differential data are merged; and a transmitting section 114 that transmits data such as the merged file 105 to the differential data restoring section 120 via a network 130. The differential data generating and sending section also comprises: an area information storing section 118 that memorizes a code area information file 115 containing block arrangement information for code areas (updatable areas) in a memory of a receiving-side terminal apparatus, a code area setting section 116 that sets a reference range in difference extraction based on the contents of the code area information file 115 and instructs it to the difference extracting section 112, and a control section 117 that controls each of the sections.

Here, the code area setting section 116, the area information storing section 118, and the control section 117 accomplish the function of the area setting means as set forth in the appended claims. The code area information file 115 corresponds to the storage area information as set forth in the claims, and the area information storing section 118 corresponds to the storage area information retaining means as set forth in the claims. The difference extracting section 112 and the control section 117 accomplish the function of the difference extracting means as set forth in the claims. The difference extracting section 112, the transmit buffer 113, and the control section 117 accomplish the function of the differential file generating means as set forth in the claims.

The differential data restoring section 120 comprises a data storage memory 121 made of a rewritable nonvolatile memory (flash ROM etc.) for storing data such as a program to be updated. The differential data restoring section 120 also comprises: a receiving section 122 that receives data such as the merged file 105 sent from the differential data generating and sending section 110, a receive buffer 123 that stores the receivedmerged file 105, a restoring section 124 that restores post-update data block by block while referencing the merged file 105 and the pre-update data within the data storage memory 121, a restore buffer 125 that temporarily holds the restoredpost-update data, a memory write section 126 the post-update data stored in the restore buffer 125 into the data storage memory 121, and a control section 127 that controls each of the sections.

Here, the data storage memory 121 corresponds to the data storage means as set forth in the claims, and the restore buffer 125 corresponds to the buffer means as set forth in the claims. The receiving section 122 and the receive buffer 123 accomplish the function of the receiving means as set forth in the claims. The restoring section 124 and the control section 127 accomplish the function of the data restoring means as set forth in the claims. The memory write section 126 and the control section 127 accomplish the function of the data write means as set forth in the claims.

The present embodiment shows a case in which code areas (updatable areas) 202, 204, which hold the data that are updated, such as a program, and user areas (non-updatable areas) 201, 203, which hold the data that are not updated, such as user data, are mixed in the data storage memory 121, for example, like user area 201, code area 202, user area 203, code area 204..., and moreover the code area 202 and the code area 204 have different block sizes.

Next, the outline of data flow at the time of data updating will be described. The pre-update data 101 and the post-update data 102 are stored respectively in the data storage section 111 of the differential data generating and sending section 110 in the state of contiguous data. Specifically, even when the code areas 202 and 204 are discontiguous in the data storage memory 121 of the terminal apparatus as in Fig. 1, the data of a plurality of code areas 103 and 104, which correspond to the code areas 202 and 204, are stored in a merged state. The respective code areas 103 and 104 indicate contiguous block groups having the same size when the pre-update data and the post-update data are stored in the memory.

Here, it is assumed that a1 to g1 are stored for the pre-update data 101 and a2 to g2 are stored for the post-update data 102 as the data of a plurality of blocks corresponding respectively to Blocks a, b, c, d, e, f, and g of the code areas in the data storage memory 121 of the terminal apparatus. Thus, the pre-update data 101, the post-update data 102, the merged file 105 of differential data, and so forth are divided by a unit, referred to as Block. Block is a unit used at the time of bulk erasure in the data storage memory 121 of the differential data restoring section 120. It should be noted that the pre-update data 101 and the post-update data 102 are provided from another apparatus or the like.

The difference extracting section 112 extracts the difference between the pre-update data 101 and the post-update data 102 based on an instruction from the control section 117. At this time, the difference extracting section 112 generates a differential data, which contains a command for instructing the following; according to the previously-mentioned Block-Move algorithm, the pre-update data 101 and the post-update data 102 stored in the data storage section 111 are compared to search matching data strings, and matching data strings are copied, as they are, from the pre-update data to the post-update data so as to be moved as Move data while new data strings of non-matching data strings are additionally written as Add data. This method for generating differential data is described in detail in the previously-mentioned Non-patent References 1 and 2 . The present embodiment describes an example of the case in which differential data are generated block by block, by comparing and referencing a plurality of blocks including the blocks that precede or follow a block to be updated.

Then, the difference extracting section 112 attaches header information to differential data generated block by block and merges them into a merged file 105 as a data to be transmitted by a predetermined unit, which is stored in the transmit buffer 113. This merged file 105 is such that differential data a12 to g12, which indicates the portions that are changed from the pre-update data 101 to the post-update data 102, are merged. Then, the merged file 105 is transmitted from the transmitting section 114 via the network 130.

In the differential data restoring section 120, the merged file 105 transferred from the differential data generating and sending section 110 is received by the receiving section 122 and is stored into the receive buffer 123. The restoring section 124 restores the post-update data while referencing the merged file 105 in the receive buffer 123 and the pre-update data in the data storage memory 121. The present embodiment describes an example of a case in which post-update data are restored block by block by referencing a plurality of blocks including the preceding and subsequent ones to a block to be updated. Then, the restoring section 124 stores the post-update data that have been restored block by block into the restore buffer 125 temporarily to accumulate them.

The restore buffer 125 has a structure that is divided into a plurality of (two in the example shown in the figure) areas 125a and 125b, and the size of each of the areas is made equal to the size of the largest block in the data storage memory 121. This restore buffer 125 is managed by a ring buffer system, and writing and reading of data are performed successively. Details of ring buffer are elaborated in Kiyoshi Ishihata, 1989, "Arugorizumu to Deta Kozo [Algorithm and Data Structure]" Iwanami Koza Software Science, Iwanami Shoten, pp.46-48.

The data storage memory 121 stores the pre-update data before data updating is started. Upon completing the restoration for one block, the restoring section 124 shifts the reference range in the data storage memory 121 by one block toward the side of the block having a larger address. Then, the memory write section 126 writes post-update data that have already restored and held in the restore buffer 125, into blocks in the data storage memory 121 that are no longer referenced. Upon completing the writing of the post-update data into the data storage memory 121, the area of the restore buffer 125 in which the post-update data was stored is freed up.

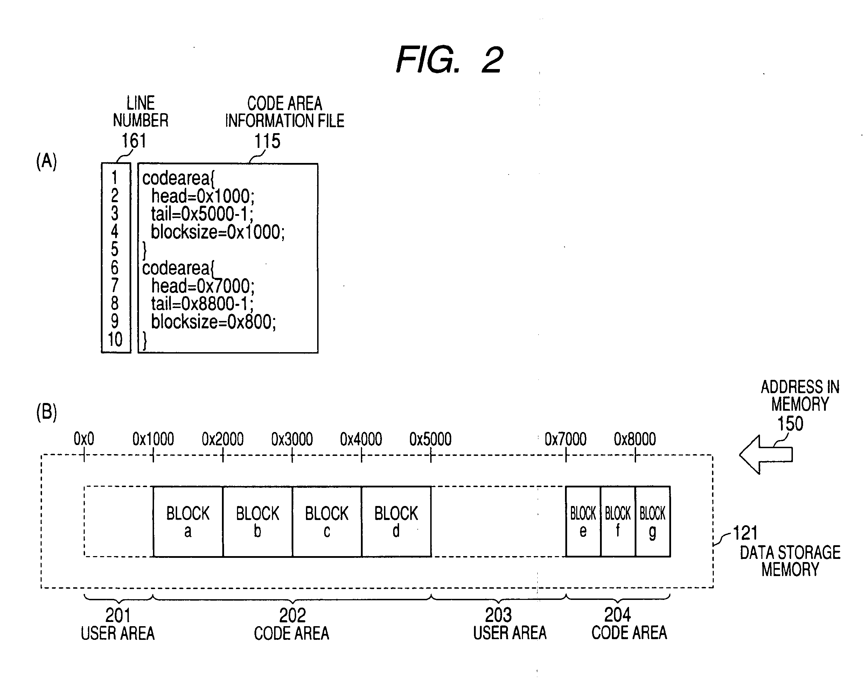

Next, the contents of the code area information file 115 and the structure of the data storage memory 121 are described with reference to Fig. 2.

Fig. 2(A) shows an example of the contents of the code area information file 115. It shouldbe noted that in the example shown in the figure, line numbers 161 are given for convenience in explanation, and they do not exist in an actual code area information file 115. Fig. 2(B) shows an example of the structure of the data storage memory 121.

Many of current embedded devices such as terminal apparatus, for example, mobile telephones, use a rewritable nonvolatile memory such as a flash ROM for storing data of software programs or the like. When reading, the flash ROM can be referenced merely by specifying addresses, in a similar manner to that in a normal RAM; however, when changing data, it requires a process in which data are erased at one time by a unit referred to as block and then new data are written. Even in a single device, block sizes may differ depending on the portion of the address space. In addition, when utilizing a flash ROM, there are cases in which code areas that store codes (programs) and user areas that store user data are separated by the unit of block.

In the example of Fig. 2(B), of the addresses 150 in the memory, addresses from 0x1000 to 0x5000-1, and addresses 0x7000 to 0x8800-1 are code areas 202 and 204, while addresses 0x0 to 0x1000-1, and addresses 0x5000 to 0x7000-1 are user areas 201 and 203. The code area 202 corresponds to addresses 0x1000 to 0x5000-1, 4 blocks from Block a to Block d. The code area 204 corresponds to addresses 0x7000 to 0x8800-1, 3 blocks from Block e to Block g. The user area 201 corresponds to addresses 0x0 to 0x1000-1, and the user area 203 corresponds to addresses 0x5000 to 0x7000-1, respectively.

The code area information file 115 indicates information about the block arrangement of the code areas 202 and 204. One code area is expressed by a range enclosed by braces { } that follow a reserved word "codearea, "which represents a code area. Values of various elements are specified in the braces { } by "head, " which represents a start address of a code area, "tail, " which represents a tail address of the code area, and "blocksize", which represents a size of the blocks in the code area.

In the example of Fig. 2 (A), the first code area 202 is represented from line 1 to line 5. It is understood from "head" that the start address of the code area is 0x1000. It is also understood from "tail" that the tail address of the code area is 0x5000-1. Further, it is understood from "blocksize" that the size of all the blocks in the code area is 0x1000. Likewise, it is understood that the second code area 204, indicated in line 6 to line 10, has a start address of 0x7000, a tail address of 0x8800-1, and a block size of 0x800.

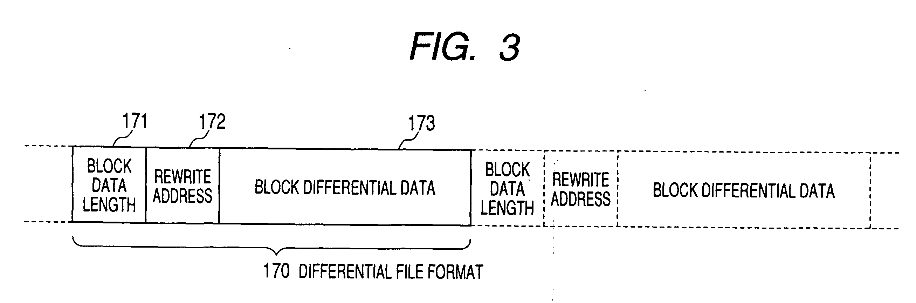

With reference to Fig. 3, the format of the merged file 105 is explained. The merged file 105 is such that header information is attached to differential data generated by comparing the pre-update data and the post-update data for each block in the data storage memory 121, and the data by a predetermined unit or the whole data are merged into a file. It should be noted that such a file in which header information is added to a differential data for each block is also referred to as a "differential file".

Fig. 3 shows one example of the format of a differential file for one block. A differential file format 170 for one block comprises a block data length 171, a rewrite address 172, and a block differential data 173. The block data length 171 indicates the total length of the differential file for one block. The rewrite address 172 is generated by referencing the code area information file 115, and indicates a head address of the area in the data storage memory 121 in which the restored post-update data are stored. The block differential data 173 is a differential data for one block that has been extracted and generated by the difference extracting section 112. It should be noted that the differential file may be transferred to the data restoring side so that it also contains, as the header information added to the differential data, address information indicating the reference range of pre-update data at the time of restoring data in the above-mentioned rewrite address 172 in addition to address information indicating the write range of the restored post-update data.

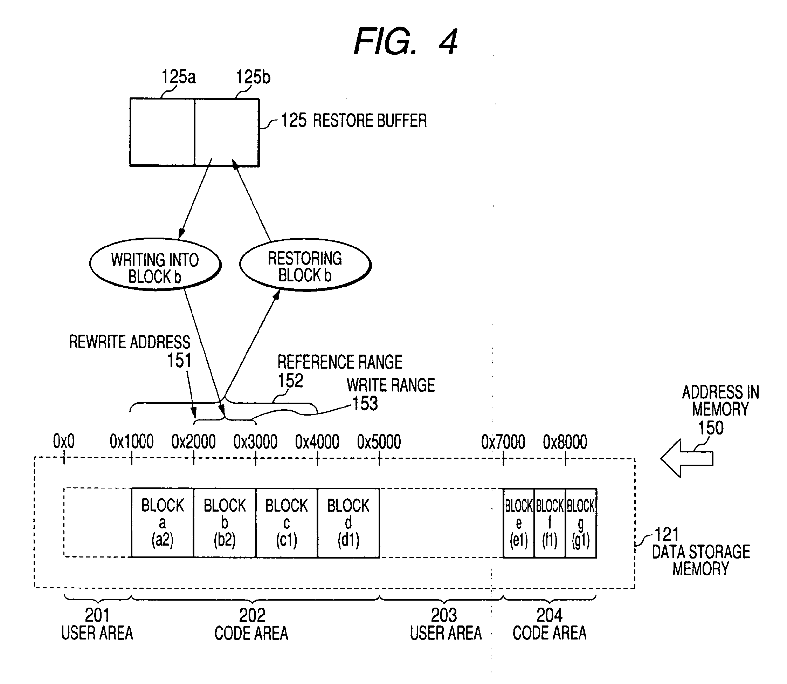

Further, the relationship between the structure of the data storage memory 121 shown in Fig. 2(B) and the differential file format shown in Fig. 3 is explained with reference to Fig. 4. Fig. 4 shows addresses and reference ranges when restoring Block b of the code area 202 in the data storage memory 121. This example shows a case in which a total of 3 blocks, namely, the target block, one preceding block, and one subsequent block, are referenced at the time of generation of differential data and restoration of post-update data.

When restoring Block b, this Block b, the one preceding Block a, and the one subsequent Block c are referenced. Therefore, the reference range 152 among the addresses 150 in the data storage memory 121 is from Block a to Block c, that is, 0x1000 to 0x5000-1. On the other hand, the restored post-update data are written into the same Block b, and therefore, the write range 153 is Block b, that is, 0x2000 to 0x3000-1. When writing post-update data, a rewrite address 151 is the head address of a write range 153, that is, 0x2000. This rewrite address 151 is provided ahead of the block differential data 173 in the differential file format 170, as shown in Fig. 3, and is attached by the difference extracting section 112 based on the code area arrangement information obtained from the code area setting section 116.

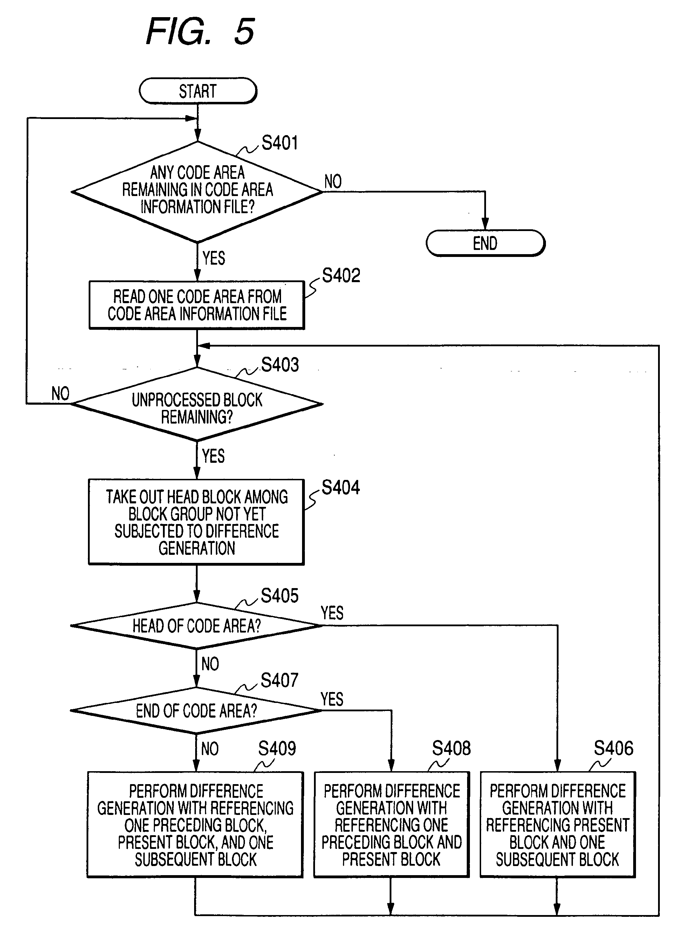

Next, an operation of the differential data generating and sending section 110 is described with reference to Fig. 5. Fig. 5 is a flowchart showing the operation procedure of differential data generation in a differential data generating and sending section of the present embodiment. The flowchart of Fig. 5 comprises a double loop, including an outer loop for processing all the code areas and an inner loop for processing all the blocks in each of the code areas. It should be noted that the description here explains a case in which a total of 3 blocks, namely, the target block, one preceding block, and one subsequent block, are referenced in pre-update data and post-update data when generating differential data.

The outer loop (steps S401 to S402) performs the processing for all the code areas defined in the code area information file 115.

The control section 117 confirms whether or not any code area to be processed remains in the code area information file 115 (step S401). Here, if there is no remaining code area, the operation is terminated. If there remains a code area, the code area setting section 116 is instructed to read one code area from the code area information file 115 (step S402) . Then, the control section 117 performs the process concerning the one code area that has been read in the next inner loop of from step S403 to step S409, and thereafter, the process returns to step S401 to continue to execute the outer loop.

The inner loop (steps S403 to S409) performs the processing concerning the one code area that has been read at step S402.

First, the control section 117 judges whether or not there remains any block that has not yet been processed in the code areas that are currently being processed (step S403). Here, if there remains no unprocessed block, the process returns to step S401 and moves to the processing for the next code area. If there remains an unprocessed block, the process proceeds to step S404.

Next, the control section 117 takes out the head block, that is, one having the smallest start address, among the block group for which a differential data has not been generated by a difference extraction (step S404). Then, the control section 117 judges whether or not the block that has been take out is the head of the code area (step S405). Here, if the block is the head of the code area, the process proceeds to step S406, where the difference extracting section 112 is instructed to perform a difference generation while referencing the block currently being processed and one subsequent block, a total of 2 blocks (step S406) . However, if there is only one block in the code area, only the block currently being processed is referenced. Next, upon completing step S406, the control section 117 returns to step S403 and repeats the process.

On the other hand, if the control section 117 judges at step S405 that the block is not the head of the code area, the process proceeds to step S407 and it is judged whether or not the block currently being processed is the end of the code area (step S407) . Here, if the block is the end of the code area, the difference extracting section 112 is instructed to perform a difference generation while referencing one preceding block and the block currently being processed, a total of 2 blocks (step S408). Next, upon completing step S408, the control section 117 returns to step S403 and repeats the process.

In step S407, if the block currently being processed is not the end of the code area, the difference extracting section 112 is instructed to perform a difference generation while referencing the block currently being processed, one preceding block, and one subsequent block, a total of 3 blocks (step S409).

The outer and inner loops can be realized by a program that indicates an iteration, such as the for statement and the while statement in the C language or the Java language, when it is realized by a program.

In the outer loop, the keyword "codearea" and the portion enclosed in the following braces in the code area information file 115 shown in Fig. 2(A) are read in order from its beginning as one code area at step S402. Also, at step S401, it is judged whether there remains a code area that follows the already-read code area in the code area information file 115, or there is no remaining code area and there is no data to the end of the fine after the code area that has been read last (there are only the data that have no meaning, such as spaces, line feeds, tabs, and annotations).

In the inner loop, one code area that has been read at step S402 in the outer loop is processed. As shown in Fig. 2(A), the head address, the tail address, and the block size of the code area are indicated in the code area information file 115. For example, when the inner loop is realized by a program using the C language, the Java language, or the like, the inner loop can be realized by the for statement in which the head address is the initial value of one variable, the tail address is the value used for judgment for termination, and the block size is a variable that increases with one iteration (repetition).

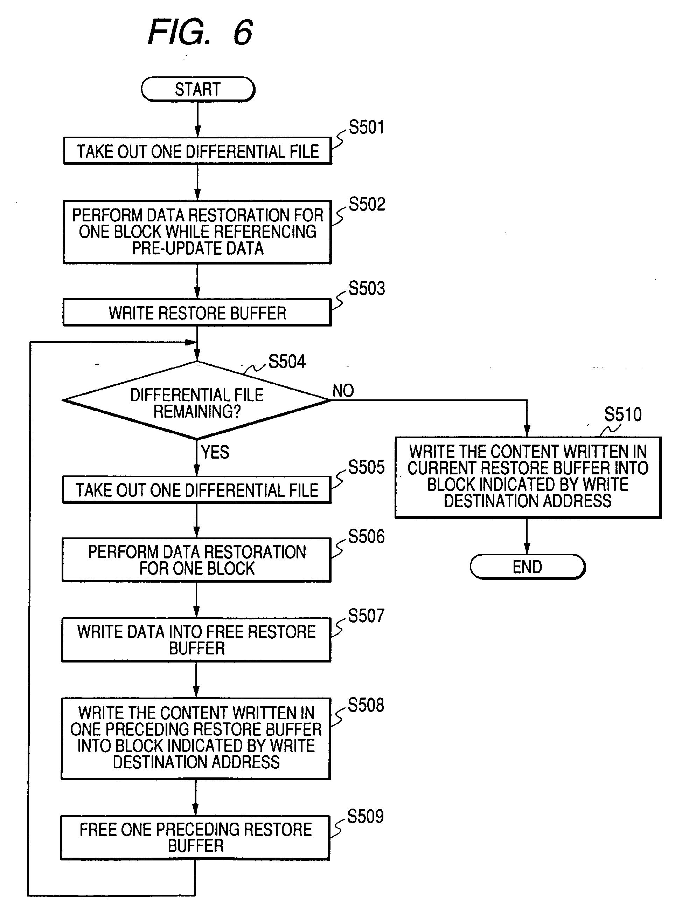

Next, an operation of the differential data restoring section 120 is explained with reference to Fig. 6. Fig. 6 is a flowchart showing the operation procedure of post-update data restoration in a differential data restoring section of the present embodiment. It should be noted that the description here explains a case in which the target block, one preceding block, and one subsequent block of the pre-update data, a total of 3 blocks, are referenced at the time of restoring post-update data using a differential file.

The control section 127 takes out a differential file at the beginning (which corresponds to one head block) from the receive buffer 123 (step S501). This differential file contains information of a differential data and a rewrite address (write range) for each block. It should be noted that although the rewrite address contains information indicating a write range for the restored post-update data, it may also contain information indicating a reference range for pre-update data in the data restoration together with the write range. Next, the restoring section 124 is instructed to perform a restoration for one block while referencing the reference range of the data storage memory 121 (step S502). Then, the restored post-update data are written into the restore buffer 125 (step S503).

Next, it is judged whether or not there remains any differential file in the receive buffer 123 (step S504) . Here, if there remains no differential file, the process proceeds to step S510, and the content written in the restore buffer 125 currently being processed is written into a block indicated by a write destination address of the data storage memory 121 (step S510). On the other hand, if there remains a differential file, the process proceeds to step S505, and a differential file at the beginning in the receive buffer 123 is taken out (step S505) .

Then, the restoring section 124 is instructed to perform a data restoration for one block while referencing the taken-out differential file and the reference range of the data storage memory 121 (step S506). Thereafter, the restored post-update data are written into a free area in the restore buffer 125 (step S507). Next, the post-update data that have been restored one time before and written into the restore buffer 125 are written into an applicable block in the data storage memory 121 according to the write destination address for the data (step S508). Subsequently, the area of the restore buffer 125 that has been referenced at step S508 is freed up (step S509). Thereafter, the process returns to step S504 and moves to the process for the next differential file.

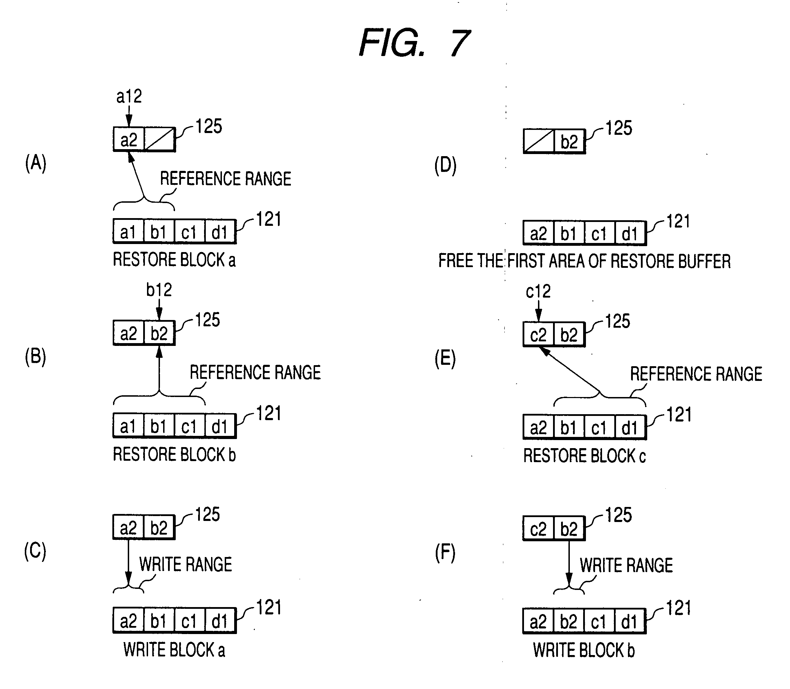

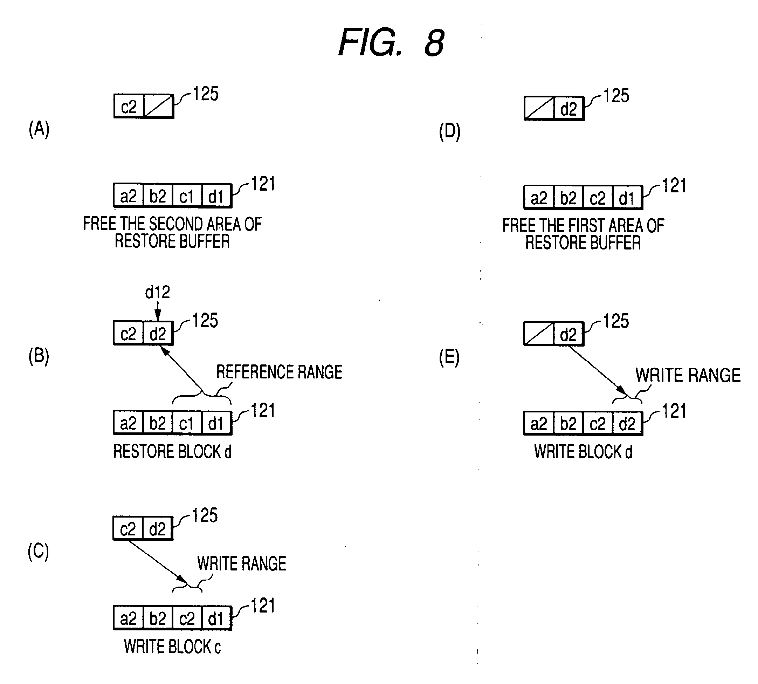

Here, the operation at the time of data restoration by the algorithm shown in Fig. 6 is specifically described with reference to Figs. 7 and 8. Here, for simplicity, the description illustrates a case in which the operation is applied to a code area comprising four contiguous Blocks a-d in the data storage memory 121.

First, as shown in Fig. 7(A), post-update data for Block a are restored. At this time, Block a is the head of the code area, and therefore, the reference range is a-b, the target Block a along with the subsequent Block b. Based on pre-update data a1 and b1 in Blocks a-b of this reference range and differential data a12, post-update data a2 are restored and stored in one area 125a (the first area) of the restore buffer 125.

Subsequently, as shown in Fig. 7(B), post-update data for Block b are restored. The reference range at this time becomes a-c, the target Block b along with the preceding and subsequent Blocks a and c. Based on pre-update data a1, b1, and c1 in Blocks a-c of this reference range and differential data b12, post-update data b2 are restored and stored in the other area (second area) 125b of the restore buffer 125.

Then, as shown in Fig. 7(C), post-update data for Block a are written. The write range at this time is the target Block a, and post-update data a2 accumulated in the first area 125a of the restore buffer 125 are written into Block a of the data storage memory 121. Thereafter, as shown in Fig. 7(D), the first area 125a of the restore buffer 125, in which the post-update data a2 that have been written were stored, is freed.

Next, as shown in Fig. 7(E), post-update data for Block c is restored. The reference range at this time is b-d, the target Block c and the preceding and subsequent Blocks b and d. Based on pre-update data b1, c1, and d1 for Blocks b-d in this reference range and differential data c12, post-update data c2 are restored and stored in the first area 125a of the restore buffer 125 that has been freed.

Then, as shown in Fig. 7 (F), post-update data for Block b are written. The write range at this time is the target Block b, and post-update data b2 accumulated in the second area 125b of the restore buffer 125 are written into Block b of the data storage memory 121. Thereafter, as shown in Fig. 8(A), the second area 125b of the restore buffer 125, in which the post-update data b2 that have been written were stored, is freed.

Next, as shown in Fig. 8(B), post-update data for Block d are restored. At this time, since Block d is the end of the code area, the reference range is c-d, the target Block d and the preceding Block c. Based on pre-update data c1, d1 in Blocks c-d of this reference range and differential data d12, post-update data d2 are restored and stored in the second area 125b of the restore buffer 125.

Then, as shown in Fig. 8(C), post-update data for Block c are written. The write range at this time is the target Block c, and post-update data c2 accumulated in the first area 125a of the restore buffer 125 are written into Block c of the data storage memory 121. Thereafter, as shown in Fig. 8(D), the first area 125a of the restore buffer 125, in which the post-update data c2 that have been written were stored, is freed.

Next, as shown in Fig. 8(E), post-update data for Block d are written. The write range at this time is the target Block d, and post-update data d2 accumulated in the second area 125b of the restore buffer 125 are written into Block d of the data storage memory 121.

It should be noted that although the foregoing embodiment has shown an example in which a differential data generation and a post-update data restoration are carried out while referencing the target block currently being processed and its preceding and subsequent blocks, it is also possible to further increase the number of blocks to be referenced. In this case, it is necessary to modify the condition branching in steps S405 and S407 shown in Fig. 5, because the difference extracting section 112 performs a difference extraction while referencing the enlarged reference range at the time of generating differential data, and further, the limits on the reference range change for blocks in the vicinity of the beginning and the end of the code area.

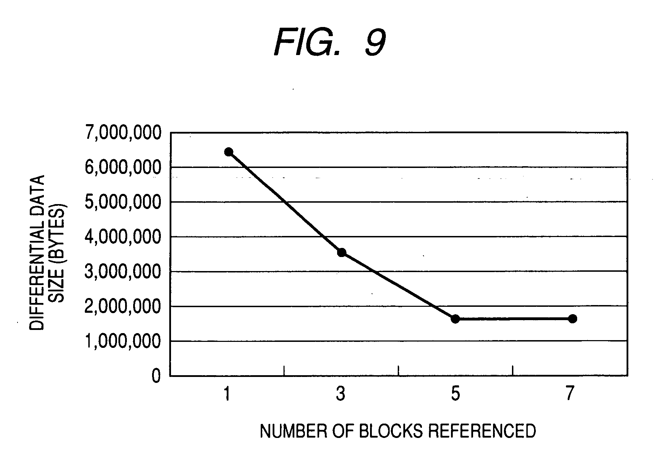

By referencing a plurality of blocks in this way, copying data from pre-update data to post-update data is made possible even with the data that are moved greatly over blocks, and the amount of differential data can be further reduced. Fig. 9 is a graph showing the relationship between the reference block numbers and the differential data sizes in the case where the above-described differential data generating method is applied to an embedded device. This Fig. 9 shows the results obtained by computation of changes in the data amount of the differential data with respect to an increase in the reference block numbers, using sample data in which pre-update data and post-update data are 16 Mbytes and the size of each one block is 128 bytes.

When one block is restored by referencing only one block, the sum total of the data amount of differential data is about 6.5 Mbytes, and the compression ratio is about 40%. In this case, the restore buffer for only one block will suffice. Likewise, when referencing a total of 3 blocks including one preceding and one subsequent blocks as in the foregoing example, the sum total of the data amount of differential data becomes as small as about 3.5 Mbytes, and the compression ratio is about 22%. In this case, it is sufficient that the restore buffer is prepared for 2 blocks. Furthermore, when referencing a total of 5 blocks including 2 preceding blocks and 2 subsequent blocks, the sum total of the data amount of differential data becomes as small as about 1.7 Mbytes, and the compression ratio is about 11%. The area of the restore buffer required in this case is for 3 blocks. It is understood from Fig. 9 that the compression ratio will not increase much even when the number of blocks referenced is increased to greater than 5.

Here, the area (number of blocks) n of the restore buffer required shows the relationship k = 2n - 1, wherein the number of blocks referenced is k, and therefore, the number of blocks of restore buffer required is n = (k + 1) /2. For example, when the number of reference blocks is 3 as described above, a restore buffer for 2 blocks should be provided, and when the number of reference blocks is 5, a restore buffer for 3 blocks should be provided.

Thus, in the present embodiment, the code area information file 115, which corresponds to arrangement information of code areas in the data storage memory 121 of the differential data restoring section 120, is provided in the differential data generating and sending section 110. When generating differential data for data updating, a reference range is set based on the code area information file 115, and differences between pre-update data and post-update data are extracted in units of blocks for each one code area in which the addresses are contiguous and the blocks are in same size in the data storage memory 121 of the differential data restoring section 120. That is, the differential data are generated so that the comparing and referencing are not performed over code areas that have different block sizes or over code areas in which the addresses are discontiguous. Also at this time, a rewrite address is generated based on the code area information file 115, and by this is added as header information to differential data to generate a differential file (merged file 105). This rewrite address is address information in the data storage memory 121, which contains the information of a write range for writing the post-update data that have been restored using differential data. It should be noted that the rewrite address may also contain the information of a reference range for restoring the post-update data using differential data.

This enables the differential data restoring section 120 that has received the merged file 105 to restore the post-update data from the pre-update data and the differential data by referencing the reference range specified based on the header information of the merged file 105. In this case, such processing as address translation is unnecessary on the restoring side, and a proper restoration of post-update data is possible by fewer and simple processing steps.

In addition, the differential data generating and sending section 110 generates differential data while referencing the preceding and subsequent blocks including the target block, and the differential data restoring section 120 restores the post-update data using the differential data while referencing the preceding and subsequent blocks including the target block so that the post-update data are written into the restore buffer 125. By performing the generation of differential data and the restoration of post-update data block by block separately, the efficiency in the computation process can be enhanced, and additionally, the data amount of differential data can be reduced by referencing a plurality of blocks.

Furthermore, using a buffer of a ring buffer type as the restore buffer 125, the post-update data of the blocks in the data storage memory 121 that have not been referenced in the restoration (that have fallen out of the reference range and become unnecessary) among the post-update data that have been accumulated after the restoration are written to rewrite the pre-update data. This eliminates the need for providing memories that respectively store pre-update data and post-update data, minimizes the memory capacity of the data storage memory 121, and makes it possible to perform data updating easily and properly with less hardware resources. Moreover, the memory capacity of the restore buffer 125 can be also reduced by using a ring buffer type.

Due to the configurations and the operations of the embodiment as described above, the following advantageous effects are attained.

First, even in cases where there is a restriction on the capacity of the data storage memory 121 and data are rewritten from pre-update data to post-update data in same blocks, the data in the data storage memory 121 can be updated merely by providing, in a RAM, the restore buffer 125 having a size that is two times the largest block length of the data storage memory 121 (in the case where 3 consecutive blocks are referenced in the restoration) and providing the receive buffer 123 for storing the merged file 105.

For example, such data updating methods as disclosed in Non-Patent Reference 1 and Non-Patent Reference 2, mentioned in the Background Art, assume the case in which the subject is an apparatus having a large-capacity storage device such as a hard disk, and the area for storing the pre-update data referenced in the restoration and the area for storing the restored post-update data are different in the storage device. On the other hand, an embedded device with a limited storage area, such as a mobile telephone, do not have free spaces for storing the restored post-update data separately from the pre-update data. In the present embodiment, pre-update data andpost-update data are stored in a flash ROM, but it is difficult, in terms of both cost and package area, to incorporate two times larger the flash ROM to store both data to update a program. In addition, a type in which the restored post-update data are deployed temporarily in a RAM and the deployed data are written into a flash ROM may be conceivable, but this is also difficult to realize since the whole post-update data cannot be deployed unless the capacity of the RAM is sufficiently large. Furthermore, in the case of RAM, an improvement in the capacity causes an increase in power consumption, which is a noticeable disadvantage.

In contrast, the present embodiment makes data updating possible with minimum hardware resources.

Second, a restoration of post-update data can be properly performed while referencing a plurality of blocks even in cases where the code areas that store the data of a program or the like that are the update target and the user areas that store user data or the like that are stored arbitrarily by the user are mixed, and the code areas are arranged discontiguously in the data storage memory 121. Moreover, it is possible to prevent the user areas from being referenced or prevent the user areas from being written by data at the time of data restoration because a distinction is made between the code areas and the user areas and the process can be performed only for the code areas.

When code areas and user areas are mixed, only the data of the code areas are provided in the form of a single file in which the data are merged at the time of upgrading a program. As in the conventional examples shown in Figs. 14 and 15, if conventional difference-generating or restoring methods are used when code areas and user data areas are mixed, the code areas and the user areas are not recognized as being distinct, and the reference ranges and the write ranges can be set only by positions in the file or the memory. Therefore, the reference ranges become different between the time of difference generation and the time of data restoration, and the data cannot be restored properly. Moreover, when dummy data are inserted so that the pre-update data have the same arrangement as that deployed in the data storage memory 121, the dummy data are referenced in a portion in which the code areas are discontiguous at the time of difference generation, resulting in different contents from the contents of the user areas to be referenced at the time of data restoration and failing to restore the data properly.

In contrast, the present embodiment is configured to perform the difference generation and the data restoration by referencing only the inside of the blocks that are contiguous and have the same size in code areas, making it possible to perform a restoration of post-update data properly. Furthermore, such processes as address translation are unnecessary in the receiving-side device at the time of data restoration, making it possible to restore post-update data with simple processing steps.

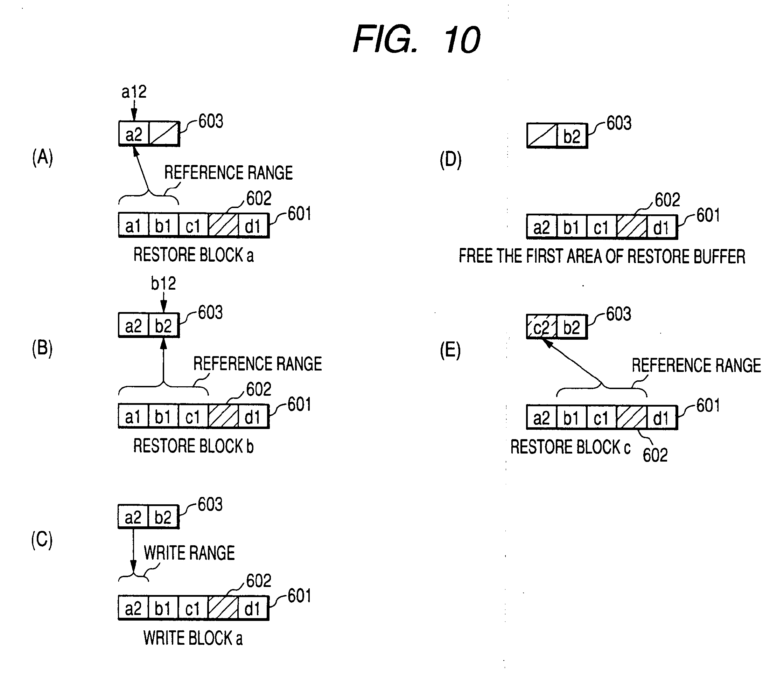

Fig. 10 shows an operation at the time of data restoration according to a conventional method as a comparative example. This comparative example is described corresponding to the operation of the embodiment shown in Figs. 7 and 8. The description here shows a case in which a user area 602, indicated by slant lines in the figure, exists between four Blocks a to d in the data storage memory 601.

At the time of data restoration, post-update data are restored and stored in a restore buffer 603 based on pre-update data of a block in a reference range and differential data, and the post-update data that has been restored are written into a block in a write range of a data storage memory 601. In this comparative example, the user area 602 is referenced as the reference range at the time of perfuming the restoration of post-update data for Block c, as shown in Fig. 10(E), and the data cannot be restored properly.

As has been described in the foregoing, according to the present embodiment, data can be updated properly and in a simple calculation procedure even when data are placed in a rewritable non-volatile memory, when code areas, which are the subject of updating, and user areas, which are not subject to data updating, are mixed, and when blocks with different sizes are mixed in a same memory. Specifically, by providing a code area information file and a code area setting means, data in a rewritable nonvolatile memory in which code areas and user areas are mixed can be rewritten while referencing a plurality of blocks with utilizing a small memory, and its practical advantages are significant.

It should be noted that the invention is not limited to the foregoing embodiment but various modifications may be made without departing from the concept.

The foregoing embodiment uses a group of blocks that are contiguous in a memory space and the same in size as a code area; this is especially effective when the moving of data is restricted within the range of code area in the definition, and the difference generation and the restoration can be performed using a simple algorithm.

In a system in which the moving of data is frequently performed between discontiguous blocks in a memory space, a efficient difference generation or restoration is possible by handing the block group in which data are moved as one logical code area irrespective of the contiguity in the memory space.

Although the present invention has been described in detail with reference to specific preferred embodiments thereof, it will be apparent to those skilled in the art that various changes and modifications may be made herein without departing from the scope and sprit of the present invention.

The present application is made based on Japanese Patent Application No. 2003-024412, filed on January 31, 2003, the content of which is incorporated by reference herein.

### <INDUSTRIAL APPLICABILITY>

As has been described above, even with a device in which hardware resources such as memory capacity is limited, the invention enables such data as a program to be updated by rewriting from pre-update data to post-update data in a same area in a memory. Moreover, even in cases where a non-updatable area and an updatable area are mixed in a memory and the storing areas for pre-update data andpost-update data are discontiguous, or where storing areas with different block sizes are mixed in the memory, data updating can be performed properly and efficiently in a simple calculation procedure.

## Claims

1. A differential data generating apparatus for generating differential data for rewriting data frompre-update data to post-update data, comprising:
area setting means for setting a reference range of pre-update data at time of difference extraction based on storage area information about the pre-update data and the post-update data, the storage area information containing arrangement information of storage areas in data storage means on a data restoring side;
difference extracting means for generating differential data by comparing and referencing the post-update data and the pre-update data in the reference range that has been set; and
differential file generating means for generating a differential file in which header information containing address information of target data at the time of restoring data in the data storage means on the data storing side is added to the differential data that has been generated.

2. The differential data generating apparatus according to claim 1, comprising:
storage area information retaining means for holding the storage area information, wherein
when the data storage means on the data restoring side has a storage area that stores the pre-update data or the post-update data in units of blocks,
the storage are a information includes address information of a storage area that stores the pre-update data and the post-update data in the data storage means on the data restoring side, and where a storage area comprising one block or a plurality of blocks having contiguous addresses in the data storage means and a same block size is defined as one updatable area in the storage area that stores the pre-update data or the post-update data in units of blocks, the storage area information also includes a start address, an end address, and a block size for each updatable area.

3. The differential data generating apparatus according to claim 2, wherein
the area setting means sets the reference range so that a plurality of blocks including a target block and one or a plurality of preceding and subsequent blocks are referenced as the reference range of the pre-update data at time of difference extraction based on the storage area information, if the pre-update data and the post-update data are divided into a plurality of blocks so as to correspond to the storage area of the data storage means on the data restoring side; and
the area setting means newly sets an area that is within the reference range and within the updatable area as the reference range if the reference range obtained from the target block does not fall within the updatable area.

4. The differential data generating apparatus according to claim 1 or 2, wherein the header information includes address information indicating a write range for post-update data at time of data restoration in the data storage means on the data restoring side.

5. The differential data generating apparatus according to claim 4, wherein the address information includes a reference range forpre-update data at time of data restoration in the data storage means on the data restoring side.

6. A differential data generating method for generating differential data for rewriting data frompre-update data to post-update data, comprising:
an area setting step of setting a reference range of pre-update data at time of difference extraction based on storage area information about the pre-update data and the post-update data, the storage area information containing arrangement information of storage areas in data storage means on a data restoring side;
a difference generating step of generating differential data by comparing and referencing the post-update data and the pre-update data within the reference range that has been set;
a differential file generating step of generating a differential file in which header information containing address information of target data at the time of restoring data in the data storage means on the data storing side is added to the differential data that has been generated.

7. The differential data generating method according to claim 6, wherein
if the data storage means on the data restoring side has a storage area that stores the pre-update data or the post-update data in units of blocks, and
if the storage area information includes address information of a storage area that stores the pre-update data and the post-update data in the data storage means on the data restoring side, and where a storage area comprising one block or a plurality of blocks having contiguous addresses in the data storage means and a same block size is defined as one updatable area in the storage area that stores the pre-update data or the post-update data in units of blocks, the storage area information also includes a start address, an end address, and a block size for each updatable area,
in the area setting step, the reference range is set so that a plurality of blocks including a target block and one or a plurality of preceding and subsequent blocks are referenced as the reference range of the pre-update data at time of difference extraction based on the storage area information, if the pre-update data and the post-update data are divided into a plurality of blocks such as to correspond to the storage area of the data storage means on the data restoring side; and
an area that is within the reference range and within the updatable area is newly set as the reference range if the reference range obtained from the target block does not fall within the updatable area.

8. A program for executing the procedure of a differential data generating method according to claim 6 or 7 by a computer.

9. A post-update data restoring apparatus for rewriting data by restoring post-update data from pre-update data usingdifferential data received via a communicating means, comprising:
data storage means for storing the pre-update data and the post-update data;
receiving means for receiving differential data transmitted via the communicating means and address information of target data in the data storage means at time of data restoration;
data restoring means for restoring post-update data, while referencing pre-update data in a reference range in the data storage means that is specified based on the address information, from the pre-update data and the differential data;
buffer means for holding the restored post-update data; and
data write means for writing the held post-update data into a write range in the data storage means that is specified based on the address information.

10. The post-update data restoring apparatus according to claim 9, wherein
the address information is generated based on storage area information, the storage area information including arrangement information of storage areas in the data storage means about the pre-update data and the post-update data and being held in a differential data generating apparatus that generates the differential data; and
the address information includes a write range for post-update data at time of data restoration in the data storage means.

11. The post-update data restoring apparatus according to claim 10, wherein the address information includes a reference range for pre-update data at time of data restoration in the data storage means.

12. The post-update data restoring apparatus according to claim 10 or 11, wherein
the data storage means stores the pre-update data by dividing the data into a plurality of blocks in units of blocks, the storage areas of the data storage means being such that storage areas comprising one or a plurality of blocks having contiguous addresses in the data storage means and having a same block size are defined as one updatable area by the storage area information held in the differential data generating apparatus;
the data restoring means restores the post-update data while referencing a plurality of blocks in the data storage means including a target block and one or a plurality of preceding and subsequent blocks as the reference range based on the address information; and
if the reference range obtained from the target block does not fall within the updatable area, the data restoring means restores the post-update data while newly referencing an area that is within the reference range and within the updatable area as the reference range.

13. The post-update data restoring apparatus according to claim 12, wherein
the buffer means has a plurality of areas comprising a ring buffer-type buffer and respectively holding post-update data that have been restored block by block; and
if a write range in the data storage means for the post-update data held in the buffer means falls out of the reference range at time of data restoration by the data restoring means, the data write means writes applicable post-update data from the buffer means into the data storage means, and thereafter instructs the buffer means to free a holding area in the buffer means in which the post-update data that have been written.

14. A post-update data restoring method for rewriting data by restoring post-update data from pre-update data using differential data received via a communicating means, comprising:
a receiving step of receiving differential data transmitted via the communicating means and address information of target data in data storage means for storing the pre-update data at time of data restoration;
a data restoring step of restoringpost-update data, while referencing pre-update data in a reference range in the data storage means that is specified based on the address information, from the pre-update data and the differential data;
a buffering step of holding the restored post-updated data; and
a data writing step of writing the held post-update data into a write range in the data storage means that is specified based on the address information.

15. The post-update data restoring method according to claim 14, wherein
the address information is generated based on storage area information, the storage area information including arrangement information of storage areas in the data storage means about the pre-update data and the post-update data and being held in a differential data generating apparatus that generates the differential data;
the address information includes a write range for post-update data at time of data restoration in the data storage means; and
if the data storage means stores the pre-update data by dividing the data into a plurality of blocks in units of blocks, the storage areas of the data storage means being such that storage areas comprising one or a plurality of blocks having contiguous addresses in the data storage means and having a same block size are defined as one updatable area by the storage area information held in the differential data generating apparatus,
in the data restoring step, the post-update data are restored while referencing a plurality of blocks in the data storage means including a target block and one or a plurality of preceding and subsequent blocks as the reference range based on the address information; and
if the reference range obtained from the target block does not fall within the updatable area, the post-update data are restored while newly referencing an area that is within the reference range and within the updatable area as the reference range in restoring the data.

16. The post-update data restoring method according to claim 15, wherein the address information includes a reference range for pre-update data at time of data restoration in the data storage means.

17. The post-update data restoring method according to claim 15 or 16, wherein
in the buffering step, using a buffer means comprising a ring buffer-type buffer and having a plurality of areas, the post-update data that have been restored block by block are stored in one of the plurality of areas of the buffer means; and
in the data writing step, if a write range in the data storage means for the post-update data held in the buffer means falls out of the reference range at time of data restoration in the data restoring step, applicable post-update data are written from the buffer means into the data storage means, and thereafter the buffer means is instructed to free a holding area in which the post-update data that have been written.

18. A program for executing the procedure of a post-update data restoring method according to any one of claims 14 through 17 by a computer.
